# FASCICULE DE BREVET EUROPEEN

(11) **EP 1 042 224 B1**
(45) Date de publication et mention de la délivrance du brevet: **31.10.2001**
(21) Numéro de dépôt: 98962494.5
(22) Date de dépôt: 17.12.1998
(51) Int. Cl.: C01B 33/037

(54) **PROCEDE ET INSTALLATION D'AFFINAGE DU SILICIUM**
VERFAHREN UND VORRICHTUNG ZUR RAFFINATION VON SILICIUM
METHOD AND INSTALLATION FOR REFINING SILICON

(30) Priorité: 19.12.1997 FR 9716544
(43) Date de publication de la demande: 11.10.2000
(73) Titulaire: CENTRE NATIONAL DE LA RECHERCHE SCIENTIFIQUE, 75016 Paris Cédex (FR)
(72) Inventeur: GARNIER, Marcel, F-38410 Uriage (FR); TRASSY, Christian, F-38100 Grenoble (FR)
(74) Mandataire: de Beaumont, Michel
(86) Numéro de dépôt international: FR9802765
(87) Numéro de publication internationale: WO9932402

(56) Documents cités:
- EP-A- 0 045 689
- EP-A- 0 274 283
- EP-A- 0 459 421
- DE-A- 2 924 584
- BABA H ET AL: "REMOVAL OF BORON FROM MOLTEN SILICON BY ARGON-PLASMA MIXED WITH WATER VAPOR" COMMISSION OF THE EUROPEAN COMMUNITIES. E.C. PHOTOVOLTAIC SOLAR ENERGY CONFERENCE. PROCEEDINGS OF THE INTERNATIONAL CONFERENCE,8 avril 1991, pages 286-289, XP002061839
- DATABASE WPI Section Ch, Week 9421 Derwent Publications Ltd., London, GB; Class E36, AN 94-173456 XP002061478 & JP 06 115922 A (KAWASAKI STEEL CORP)
- PATENT ABSTRACTS OF JAPAN vol. 097, no. 010, 31 octobre 1997 & JP 09 142823 A (KAWASAKI STEEL CORP), 3 juin 1997
- PATENT ABSTRACTS OF JAPAN vol. 096, no. 002, 29 février 1996 & JP 07 267624 A (KAWASAKI STEEL CORP), 17 octobre 1995
- PATENT ABSTRACTS OF JAPAN vol. 017, no. 185 (C-1047), 12 avril 1993 & JP 04 338108 A (KAWASAKI STEEL CORP), 25 novembre 1992

## Description

La présente invention concerne la fabrication du silicium pour constituer des cellules de production d'énergie électrique par effet photovoltaïque.

Actuellement, le silicium destiné aux techniques photovoltaïques est essentiellement constitué des rebuts de l'industrie micro-électronique, car le silicium utilisé pour des applications photovoltaïques peut contenir une proportion d'impuretés (de l'ordre de 10⁻⁶) moins critique que le niveau d'impuretés (10⁻⁹) généralement requis en micro-électronique.

Il serait souhaitable de disposer d'une autre source de silicium pour produire du silicium adapté aux produits photovoltaïques. En particulier, les rebuts de l'industrie micro-électronique risquent de devenir rapidement insuffisants pour satisfaire les besoins des techniques photovoltaïques.

Actuellement, on cherche à affiner le silicium fabriqué pour des applications métallurgiques pour obtenir du silicium d'une pureté adaptée aux techniques photovoltaïques. Le silicium utilisé en métallurgie peut contenir plusieurs pour cent d'impuretés telles que le fer, le titane, le bore, le phosphore, etc.

On connaît (par exemple du document EP-A-0 459 421) un procédé de purification du silicium qui consiste à diriger un plasma d'arc vers la surface d'un bain de silicium. La vitesse élevée du plasma provoque un mouvement du bain dont l'intensité dépend de la puissance du plasma. Le silicium est contenu dans un creuset chaud à paroi de silice (SiO₂).

Un tel procédé présente plusieurs inconvénients. En particulier, le recours à un plasma d'arc nécessite des électrodes qui constituent une source de pollution du silicium devant être purifié. De plus, le recours à une paroi de silice est une source de pollution du silicium du bain par l'oxygène de la silice.

La présente invention vise à proposer un nouveau procédé d'affinage du silicium permettant d'atteindre un degré de pureté élevé et qui soit particulièrement adapté à l'affinage de grandes quantités de silicium, donc adapté à un processus industriel d'obtention de silicium présentant un degré de pureté suffisant pour les techniques photovoltaïques.

La présente invention vise, en particulier, à pallier les inconvénients des procédés connus.

La présente invention vise également à proposer un procédé d'affinage qui puisse être mis en oeuvre du début à la fin dans une même installation d'affinage. En particulier, la présente invention vise à minimiser le recours à des moyens d'affinage mécaniquement différents les uns des autres et à permettre l'élimination d'impuretés de natures différentes au sein d'un même équipement.

La présente invention vise en outre à ce que ce même équipement puisse servir pour "doper" le silicium une fois affiné.

Pour atteindre ces objets, la présente invention prévoit un procédé d'affinage du silicium consistant à remplir un creuset froid inductif de silicium solide ; à liquéfier le contenu du creuset ; à organiser, au moyen du creuset inductif, un brassage turbulent du bain de silicium en amenant le liquide depuis le fond du creuset vers la surface libre en remontant le long de l'axe central du creuset ; et à diriger un plasma produit par une torche à plasma inductive vers la surface du bain pendant une durée permettant l'élimination d'impuretés pour lesquelles le gaz réactif du plasma est adapté.

Selon un mode de réalisation de la présente invention, l'intensité du brassage turbulent est fonction de la fréquence d'un champ électromagnétique crée par le creuset.

Selon un mode de réalisation de la présente invention, le procédé consiste à utiliser séquentiellement plusieurs gaz réactifs.

Selon un mode de réalisation de la présente invention, les gaz réactifs sont choisis dans le groupe comprenant le chlore, l'oxygène, l'hydrogène, et l'eau sous forme de vapeur.

Selon un mode de réalisation de la présente invention, le procédé consiste en outre, après purification du bain de silicium, à inverser le sens de brassage du bain et à injecter, comme gaz réactif du plasma, un élément permettant de doper le silicium.

Selon un mode de réalisation de la présente invention, le gaz réactif injecté pour doper le silicium est de l'hydrogène.

Selon un mode de réalisation de la présente invention, le silicium est traité par lots d'un volume correspondant sensiblement au volume que peut contenir le creuset, le creuset n'étant pas vidé intégralement à l'issue du traitement d'un lot courant pour constituer une amorce liquide favorisant la fusion lors du lot suivant.

Selon un mode de réalisation de la présente invention, lors d'une phase de démarrage initiale de l'installation, le plasma est utilisé sans gaz réactif pour chauffer la surface de la charge de silicium contenue dans le creuset jusqu'à ce que cette charge atteigne une température suffisante pour la rendre conductrice, la poursuite du chauffage de la charge et son maintien à la température souhaitée étant par la suite assurés par le champ magnétique du creuset inductif.

La présente invention prévoit en outre une installation d'affinage du silicium comportant un creuset froid inductif propre à recevoir le silicium, une torche à plasma inductive dirigée vers la surface libre de la charge de silicium contenue dans le creuset, et une culasse magnétique amovible entre la torche à plasma et le creuset, la culasse étant annulaire pour permettre le passage de la flamme de plasma.

Selon un mode de réalisation de la présente invention, le creuset comporte, en son fond, un orifice dont l'ouverture est commandée par une vanne électromagnétique.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente, de façon très schématique, une installation d'affinage selon la présente invention au cours d'une phase de purification du silicium ; et
la figure 2 représente l'installation de la figure 1 au cours d'une phase de dopage du silicium selon la présente invention.

Les mêmes éléments ont été désignés par les mêmes références aux différentes figures. Pour des raisons de clarté, seuls les éléments de l'installation qui sont nécessaires à la compréhension de l'invention ont été représentés aux figures et seront décrits par la suite.

Selon la présente invention, une installation d'affinage du silicium comprend essentiellement un creuset froid 1 chauffé par induction (bobine 12), destiné à contenir un bain de silicium b, et une torche à plasma inductif 2 orientée pour que la "flamme" f de plasma vienne lécher la surface libre du bain b.

La fonction du plasma est de créer un milieu plasma formé des radicaux libres et des ions du ou des gaz plasmagènes au voisinage de la surface libre du bain b de silicium. L'atmosphère ainsi créée à la surface libre du bain de silicium est extrêmement réactive et les impuretés présentes à la surface du bain se combinent avec le gaz réactif du plasma et deviennent volatiles (ou, à l'inverse, solides) à la température de surface du bain. L'ensemble de l'installation est maintenu sous une atmosphère contrôlée, ce qui permet d'évacuer au fur et à mesure les molécules volatiles contenant des impuretés.

Le choix d'une torche à plasma inductif présente, en particulier par rapport à l'utilisation d'une torche à plasma par champ électrique ("plasma arc"), l'avantage de ne pas polluer le bain par la consommation de l'électrode nécessaire à la génération du plasma.

Un autre avantage lié à l'utilisation d'une torche à plasma, par rapport à l'utilisation d'un faisceau d'électrons pour focaliser des densités d'énergie importantes propices à la vaporisation directe des espèces à la surface d'un bain, est que, dans le cas d'un plasma inductif, on a un système au voisinage de l'équilibre, et on peut donc mettre à profit les différences de volatilité des éléments ou de leurs composés. Par exemple, le silicium peut ne pas être vaporisé.

Un autre avantage est que l'action chimique du plasma à l'interface liquide-plasma est répartie sur toute la surface du bain grâce à l'écoulement du gaz plasmagène fourni par la torche.

Le recours à un creuset froid inductif a plusieurs objectifs. Tout d'abord, cela présente l'avantage de ne pas polluer le silicium liquide qui se trouve maintenu dans un auto-creuset, c'est-à-dire qu'une peau de silicium solide (non représentée) revêt l'intérieur du creuset et contient le silicium liquide. Ainsi, le silicium liquide ne risque pas d'être pollué par le matériau constitutif des parois 11 du creuset proprement dit, ou d'une paroi intermédiaire comme dans les procédés connus.

Un autre avantage du recours à un creuset froid inductif est que cela permet de créer un brassage turbulent dans le bain de silicium de manière à favoriser la purification. En effet, en l'absence de brassage du bain de silicium, les temps de diffusion des impuretés qui doivent migrer de l'intérieur de la masse fondue vers l'interface liquide-plasma pour pouvoir être combinées puis vaporisées sont incompatibles avec un procédé économiquement viable d'un point de vue industriel.

Une caractéristique de la présente invention est que le champ magnétique du creuset froid inductif est, de préférence, alternatif et monophasé, c'est-à-dire que la bobine 12 du creuset froid 1 est alimentée par une tension alternative monophasée. Le choix d'un tel champ magnétique présente l'avantage de provoquer un chauffage du bain de silicium en même temps qu'il en provoque le mouvement.

En effet, en soumettant le silicium à un champ magnétique alternatif au moyen de la bobine 12 du creuset, on provoque, dans le silicium, des variations de flux qui donnent naissance à des courants induits localisés en périphérie du matériau (dans la peau électromagnétique).

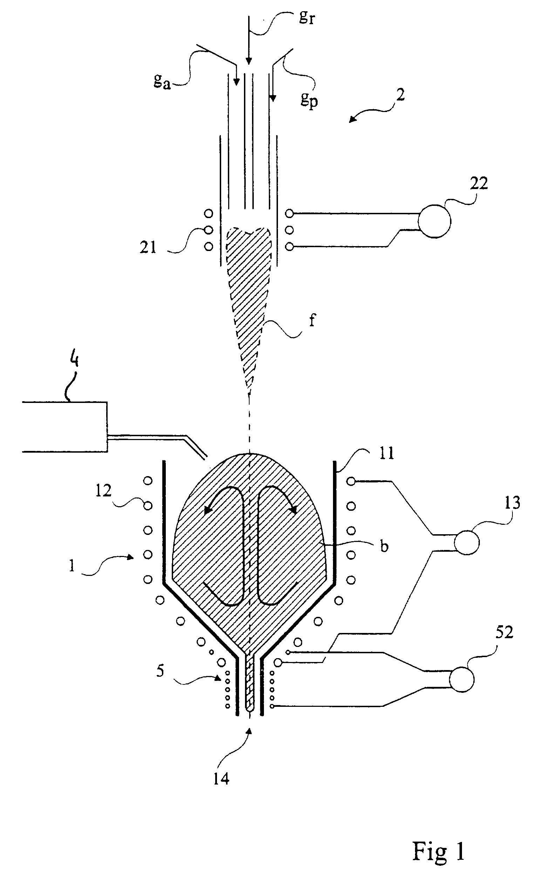

Ces courants induits ont un effet thermique permettant le chauffage (donc la fusion) du matériau, et des effets mécaniques (pression magnétique et brassage turbulent) résultant de l'interaction entre ces courants et le champ magnétique appliqué. Lorsque le matériau devient liquide, la partie non rotationnelle des forces induit une pression magnétique dans le matériau dont la surface libre prend alors une forme de dôme (figure 1). La partie rotationnelle des forces induit des couples moteurs à l'intérieur du liquide et le met en mouvement dans un brassage électromagnétique. Ce brassage est dit turbulent car il provoque, non seulement des recirculation à grande échelle (à l'échelle du bain) et à vitesse élevée pour renouveler constamment et rapidement la surface libre du bain et amener les espèces libres à éliminer près de la surface réactive, mais également une turbulence à petite échelle au voisinage de la surface libre pour amener toutes les substances à éliminer sur la surface et augmenter ainsi les cinétiques réactionnelles. Toutes les échelles du brassage subissent directement une injection d'énergie cinétique à partir de l'énergie magnétique.

A l'inverse, une circulation par frottement fluide comme utilisée dans les procédés connus (EP-A-0 459 421) crée un brassage à grande échelle et ce n'est que par dégradation et transfert d'énergie que le mouvement est transmis vers les échelles plus petites. Outre l'inconvénient d'une grande déperdition d'énergie pour parvenir à des turbulences à petite échelle, un tel procédé ne permet pas de contrôler le mouvement autrement qu'en intervenant sur le plasma d'arc générateur du mouvement.

Selon l'invention, le choix de la fréquence du champ magnétique alternatif permet de régler les paramètres (effet thermique, pression magnétique, brassage électromagnétique) du bain et, en particulier, de favoriser l'un des paramètres.

Selon la présente invention, la fréquence d'excitation de la bobine 12 du creuset 1, alimentée par un générateur 13, est choisie pour favoriser un brassage turbulent du bain de silicium b qui, dans des étapes de purification du procédé de l'invention, s'effectue dans le sens symbolisé par les flèches à la figure 1, c'est-à-dire que le liquide est amené depuis le fond du creuset vers la surface libre en remontant le long de l'axe, la descente vers le fond du creuset s'effectuant en périphérie de celui-ci.

Le caractère turbulent ou non du brassage dépend de la fréquence du courant, de la taille du creuset et de la valeur typique du champ magnétique. Le nombre de Reynolds (Re) permet de déterminer la nature de l'écoulement. Le paramètre d'écran (Rω) est fonction du diamètre du creuset, de la conductivité électrique du bain et de la fréquence (Rω = *µ*σR², où *µ* désigne la perméabilité du vide, ω désigne la pulsation, σ désigne la conductivité électrique du matériau liquide et R désigne le rayon du creuset). Le paramètre d'écran caractérise la plus ou moins grande pénétration du champ dans le bain. Si le champ ne pénètre que très superficiellement (fréquence élevée), les forces de Laplace ne s'exerceront que sur la partie périphérique du bain et le brassage sera faible. De même, si le champ pénètre totalement (fréquence nulle), il n'y aura pas de brassage. Pour que le brassage soit maximum, le paramètre d'écran doit avoir une valeur de l'ordre de 40. On notera que ce paramètre d'écran est ajustable par l'opérateur.

Un tel brassage présente plusieurs avantages pendant les phases de purification.

Tout d'abord, le fluide de la partie inférieure du creuset est ramené rapidement vers la surface libre réactive et les impuretés peuvent alors être combinées puis vaporisées par le plasma de sorte à être évacuées. On notera que les espèces formées par réaction du plasma avec les impuretés contenues dans le silicium sont éliminées en continu dans l'installation et, par conséquent, la réactivité de l'interface est constante et ne sature pas.

Un autre avantage de la circulation prévue à la figure 1 est que si des particules solides (souvent des oxydes plus légers), résultant également de la réaction chimique d'impuretés avec le plasma, se forment à la surface du bain, celles-ci sont entraînées vers la paroi 11 du creuset 1, c'est-à-dire vers la croûte de silicium solide où elles sont piégées, augmentant ainsi l'efficacité de la purification.

Le choix des fréquences d'alimentation de la bobine du creuset est fonction de sa taille et de sa forme. Par exemple, avec un creuset d'un diamètre de l'ordre de 60 cm pouvant contenir une charge de silicium de l'ordre de 200 kg, on peut travailler avec une fréquence de l'ordre de 50 ou 60 Hz pour la bobine du creuset, donc à la fréquence du réseau électrique industriel.

Un avantage de la présente invention est qu'il est désormais possible d'injecter simultanément ou successivement, sans autre manipulation que l'ouverture de vannes d'alimentation en gaz (non représentées), divers gaz réactifs gᵣ dans le plasma et d'en contrôler la concentration par rapport aux gaz plasmagènes. Dans une torche 2 telle qu'illustrée par la figure 1, le gaz réactif gᵣ est amené au centre de la torche, un gaz auxiliaire gₐ, par exemple de l'argon, est véhiculé de façon concentrique aux gaz réactifs. Un gaz plasma gₚ, par exemple également de l'argon, est en outre véhiculé de façon concentrique au gaz auxiliaire. Une bobine d'induction 21 entoure l'extrémité libre de la torche 2 de sorte à créer le plasma inductif. La bobine de la torche est généralement excitée par un courant alternatif à une fréquence de l'ordre du MHz par un générateur 22.

Selon la présente invention, différents gaz réactifs peuvent être injectés dans le plasma soit simultanément, soit successivement pour leur action sélective sur les éléments indésirables. A titre d'exemple de gaz réactifs, on notera l'oxygène, l'hydrogène, le chlore ou l'eau, sous forme de vapeur. Le choix du gaz est déterminé par les propriétés chimiques et thermodynamiques de l'impureté à éliminer. L'utilisation de chlore dans le plasma permet de former des chlorures volatiles avec des impuretés comme le bore, l'antimoine ou l'arsenic qui sont parmi les impuretés les plus fréquentes dans le cas de silicium provenant de rejets de l'industrie micro-électronique. Le silicium se combine également au chlore pour former un chlorure volatile. L'évaporation des impuretés est favorisée par le contrôle du renouvellement de l'atmosphère au-dessus du bain de silicium fondu (une pression de vapeur plus faible pour les chlorures d'impuretés les rend plus volatiles).

L'oxygène permet l'élimination des traces de carbone (le silicium est obtenu par réduction du sable (silice) par le carbone en four à arc). On notera que l'injection de gaz réactif tel que l'oxygène dans le plasma est parfaitement contrôlable à la différence d'une libération d'oxygène par une paroi en silice comme dans les procédés connus.

L'oxygène, ou bien plus efficacement l'eau sous forme de vapeur, ou bien la combinaison oxygène-hydrogène, permet de rendre volatile le bore sous la forme B₃H₃O₆, qui est gazeux.

De façon pratique, pour des raisons de sécurité et d'économies évidentes, on préfère l'eau ou l'oxygène chaque fois que cela est possible.

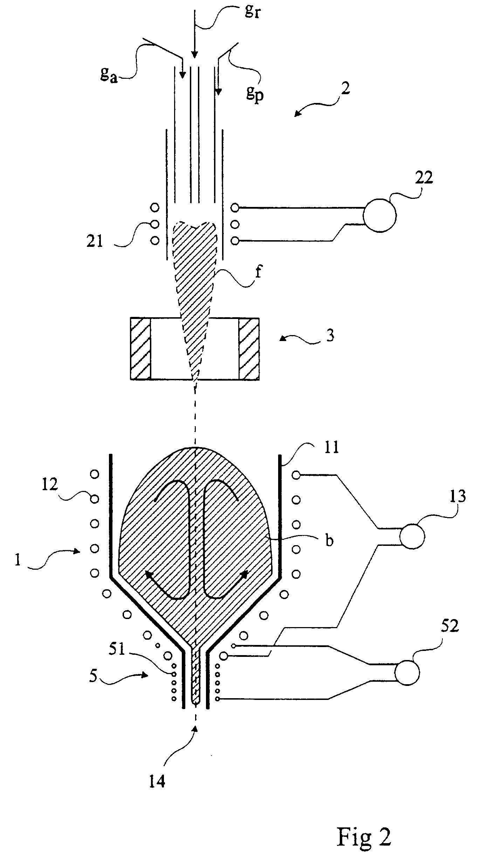

De préférence, l'installation d'affinage comprend en outre une culasse magnétique amovible 3 (figure 2) dont le rôle est d'inverser le sens de circulation dans le bain de silicium. La vitesse de brassage étant proportionnelle à la valeur typique du champ magnétique, la présence ou non de la culasse magnétique permet de modifier ce champ et donne la vitesse et le caractère turbulent ou non de l'écoulement, sans avoir à modifier la fréquence, ce qui présenterait de sérieuses difficultés technologiques et fondamentales. Le rôle de la culasse magnétique 3 sera mieux compris par la suite.

L'invention va maintenant être décrite en relation avec un exemple de mise en oeuvre préféré du procédé d'affinage du silicium dans une installation telle que décrite ci-dessus.

Au départ, le creuset froid 1 est rempli de poudres, de copeaux ou de débris de silicium provenant, par exemple, d'un réservoir 4. Le silicium étant semiconducteur, il doit être préchauffé avant de devenir progressivement conducteur (autour de 800°C) et de pouvoir alors être chauffé par induction au moyen de la bobine 12 du creuset 1.

Selon la présente invention, on actionne d'abord la torche à plasma 2, pour préchauffer la charge de silicium solide et la porter à la température permettant d'obtenir un couplage avec le champ à basse fréquence créé par la bobine 12 du creuset 1. Le gaz utilisé dans cette phase de préchauffage est, de préférence, de l'argon. Le cas échéant, de l'hydrogène est introduit comme gaz réactif pour augmenter la conductivité thermique du plasma et accélérer ainsi le préchauffage de la charge de silicium.

Un avantage d'effectuer un préchauffage au moyen de la torche à plasma par rapport à l'utilisation classique d'un suscepteur est que l'on évite ainsi toute pollution du silicium qui serait autrement apportée par le matériau du suscepteur (généralement du carbone ou du fer).

A la fin de cette phase de démarrage, le silicium est entièrement fondu et l'énergie nécessaire au maintien de cet état fondu est essentiellement délivrée par la bobine du creuset 1.

Dans une deuxième phase de purification, on favorise un brassage turbulent du bain de silicium dans le sens des flèches à la figure 1 et on introduit, dans le plasma, simultanément ou séquentiellement, un ou plusieurs gaz réactifs appropriés à l'élimination des impuretés qui, en se combinant avec un gaz réactif à la surface du bain b, forment des espèces volatiles qui sont vaporisées. On notera que les traces d'oxygène (ou d'autres impuretés) contenues dans les poudres et copeaux introduits par le distributeur 4 de silicium solide lors de l'étape précédente provoquent la formation d'une gangue en surface du bain. Cette gangue, qui est constituée d'oxyde et de sous-oxydes plus légers que le reste du bain, est rejetée à la périphérie du creuset 1 grâce au brassage turbulent dans le sens des flèches à la figure 1. On garantit ainsi une surface dégagée à l'interface liquide-plasma.

La phase de purification peut comporter plusieurs étapes correspondant à l'utilisation de différents gaz réactifs en fonction des éléments à éliminer du bain liquide.

Une autre caractéristique de la présente invention, appliquée à l'obtention de silicium pour des applications photovoltaïques, est de prévoir une troisième phase de "dopage" du silicium purifié, par des éléments favorisant le pouvoir photovoltaïque du silicium polycristallin par passivation des défauts, par exemple de l'hydrogène.

Selon la présente invention, une fois le silicium purifié, on introduit comme gaz réactif, un dopant dans le plasma, par exemple, de l'hydrogène. Pour améliorer l'inclusion des atomes d'hydrogène dans le silicium, on inverse de préférence les mouvements du brassage turbulent dans le bain liquide. Pour ce faire, selon la présente invention, on met en place la culasse magnétique 3 qui présente une forme annulaire au centre de laquelle passe le plasma. Bien qu'il soit possible d'utiliser une culasse magnétique annulaire sous forme d'une bobine commandée par une excitation alternative, on préférera selon l'invention utiliser une culasse magnétique constituée d'un aimant permanent, par exemple, sous la forme de deux demi-anneaux qui sont ramenés autour de la flamme f de plasma lorsque l'on souhaite inverser le sens du brassage turbulent dans le bain. Cette inversion du sens du brassage turbulent du plasma conduisant, comme l'illustre la figure 2, à ce que le liquide soit entraîné vers le fond du creuset en descendant le long de l'axe et remonte vers la surface libre par la paroi du creuset, favorise l'inclusion des atomes d'hydrogène dans le bain.

De préférence, pour éviter que l'inversion du brassage ne provoque le retour au centre du bain des gangues et scories rejetées en périphérie au cours de la phase précédente, on commence par abaisser la puissance de chauffage du creuset 1, pour augmenter l'épaisseur de la couche externe solide du bain fondu, et figer ainsi les espèces solides contenant des impuretés.

Dans une quatrième phase, une fois le silicium affiné et dopé prêt, celui-ci est coulé sous forme de lingots propres à être sciés pour obtenir des cellules solaires. Cette coulée peut, selon un mode de réalisation non représenté, être obtenue par renversement du creuset.

Selon le mode de réalisation représenté aux figures 1 et 2, la coulée est obtenue par l'actionnement d'une vanne 5 de fermeture d'un orifice 14 au fond du creuset 1.

Par exemple, on pourra utiliser une vanne électromagnétique qui a pour objectif de faire fondre un bouchon de silicium solide qui obture le fond du creuset. Ce bouchon est maintenu, pendant les autres phases, à l'état solide par refroidissement de la paroi de l'orifice 14. On utilise alors une bobine 51 entourant l'orifice de sortie. Cette bobine 51 est imbriquée dans la partie basse du creuset avec la bobine 12 du creuset lui-même. La fréquence du courant alimentant la bobine 51 de vanne au moyen d'un générateur 52 est adaptée à la dimension de l'orifice 14 et est donc beaucoup plus élevée que la fréquence du courant qui alimente la bobine 12 du creuset. On évite ainsi un couplage trop important entre les deux bobines. Dans la zone de recouvrement des deux bobines 12 et 51, aucune des deux fréquences n'est, bien entendu, optimale. En l'absence de courant dans la bobine 51, le matériau du creuset à cette hauteur est chaud, donc conducteur, mais solide. Lorsqu'un courant est appliqué à la bobine 51 de la vanne 5, le supplément de chauffage entraîne la fusion de cette zone. Cette fusion se propage progressivement vers le bas provoquant ainsi l'ouverture de la vanne par fusion du bouchon de silicium solide. La fermeture de la vanne est obtenue en coupant le courant dans la bobine 51.

A titre de variante de réalisation, on pourra utiliser une petite torche à plasma inductif placée sous l'orifice de vidange du creuset. Cette torche est alors retirée au moment où la température de couplage est atteinte (cette température de couplage est, dans le cas du silicium, inférieure à la température de fusion).

Pour le traitement d'une charge (ou lot) suivante de silicium à affiner, on laisse de préférence subsister une quantité liquide de la phase précédente de manière à éviter de recourir de nouveau à une première phase de démarrage.

On notera que l'inversion du sens de brassage prévue dans la troisième phase de dopage peut également, et de façon préférentielle, être prévue dans la phase initiale de démarrage pour améliorer le mélange des poudres et copeaux de silicium à fondre en les entraînant vers le centre du creuset et en évitant un piégeage immédiat par les parois froides.

Un avantage de la présente invention est qu'au moyen d'une seule installation, couplant plasma inductif et creuset froid inductif, on obtient un affinage du silicium par rapport à toutes ses impuretés. Par conséquent, cet affinage peut être obtenu dans des conditions économiques intéressantes.

Un autre avantage de la présente invention est qu'elle maintient, pendant les phases de purification et de dopage, le silicium dans un état liquide grâce à un moyen de chauffage inductif non polluant. Ce moyen de chauffage est extérieur au creuset et laisse complètement libre la surface du bain.

Un autre avantage de l'utilisation d'un creuset froid inductif est que le silicium liquide est brassé avec une forte intensité de turbulence qui favorise les transferts de matière dans le bain. La turbulence induite au voisinage de l'interface accélère les transferts de matière entre les deux phases en dessus et au-dessous de la surface libre et accroît les cinétiques réactionnelles.

Un autre avantage de la présente invention est que le recours à une culasse magnétique entre la torche et le creuset rend possible une inversion du sens de brassage et, par conséquent, on peut favoriser la fusion d'une nouvelle charge de silicium et/ou améliorer la purification et/ou améliorer le dopage d'un silicium affiné.

Bien entendu, dans le cadre des revendications ci-dessous la présente invention est susceptible de diverses variantes qui apparaîtront à l'homme de l'art. En particulier, les gaz utilisés dans le plasma seront choisis en fonction des impuretés devant être éliminées du bain. De plus, la réalisation pratique d'une installation d'affinage permettant la mise en oeuvre du procédé de l'invention est à la portée de l'homme de l'art à partir des indications fonctionnelles données ci-dessus. On veillera à respecter le couplage entre le plasma et le creuset froid qui permet l'amorçage, sans pollution, de la fusion par induction d'un matériau semiconducteur, et l'utilisation d'une culasse magnétique annulaire permettant de forcer le sens de convection dans le bain.

## Revendications

1. Procédé d'affinage du silicium, **caractérisé en ce qu'**il consiste :
à remplir un creuset froid inductif (1) de silicium solide ;
à liquéfier le contenu du creuset ;
à organiser, au moyen du creuset inductif, un brassage turbulent du bain de silicium (b) en amenant le liquide depuis le fond du creuset vers la surface libre en remontant le long de l'axe central du creuset ; et
à diriger un plasma (f) produit par une torche à plasma inductive (2) vers la surface du bain pendant une durée permettant l'élimination d'impuretés pour lesquelles le gaz réactif (gᵣ) du plasma est adapté.

2. Procédé selon la revendication 1, **caractérisé en ce que** l'intensité du brassage turbulent est fonction de la fréquence d'un champ électromagnétique crée par le creuset (1).

3. Procédé selon la revendication 1 ou 2, **caractérisé en ce qu'**il consiste à utiliser séquentiellement plusieurs gaz réactifs (gᵣ).

4. Procédé selon la revendication 3, **caractérisé en ce que** les gaz réactifs (gᵣ) sont choisis dans le groupe comprenant le chlore, l'oxygène, l'hydrogène et l'eau sous forme de vapeur.

5. Procédé selon l'une quelconque des revendications 1 à 4, **caractérisé en ce qu'**il consiste en outre, après purification du bain de silicium (b) :
à inverser le sens de brassage du bain ; et
à injecter comme gaz réactif (gᵣ) du plasma, un élément permettant de doper le silicium.

6. Procédé selon la revendication 5, **caractérisé en ce que** le gaz réactif (gᵣ) injecté pour doper le silicium est de l'hydrogène.

7. Procédé selon l'une quelconque des revendications 1 à 6, **caractérisé en ce que** le silicium est traité par lots d'un volume correspondant sensiblement au volume que peut contenir le creuset (1), le creuset n'étant pas vidé intégralement à l'issue du traitement d'un lot courant pour constituer une amorce liquide favorisant la fusion lors du lot suivant.

8. Procédé selon l'une quelconque des revendications 1 à 7, **caractérisé en ce que**, lors d'une phase de démarrage initiale de l'installation, le plasma est utilisé sans gaz réactif pour chauffer la surface de la charge de silicium contenue dans le creuset (1) jusqu'à ce que cette charge atteigne une température suffisante pour la rendre conductrice, la poursuite du chauffage de la charge et son maintien à la température souhaitée étant par la suite assurés par le champ magnétique du creuset inductif.

9. Installation d'affinage du silicium, **caractérisée en ce qu'**elle comporte :
un creuset froid inductif (1) propre à recevoir le silicium ;
une torche à plasma inductive (2) dirigée vers la surface libre de la charge de silicium contenue dans le creuset ; et
une culasse magnétique amovible (3) entre la torche à plasma (2) et le creuset (1), la culasse étant annulaire pour permettre le passage de la flamme (f) de plasma.

10. Installation selon la revendication 9, **caractérisée en ce que** le creuset (1) comporte, en son fond, un orifice (14) dont l'ouverture est commandée par une vanne électromagnétique (5).

## Patentansprüche

1. Verfahren zur Raffination bzw. Reinigung von Silizium, **dadurch gekennzeichnet, daß** es umfaßt:
- ein induktiver Kalt-Schmelztiegel (1) wird mit festem Silizium gefüllt;
- der Schmelztiegelinhalt wird verflüssigt;
- mit Hilfe des induktiven Schmelztiegels wird eine turbulente Durchmischung bzw. Durchwirbelung des Siliziumbads (b) herbeigeführt, indem die Flüssigkeit vom Boden des Schmelztiegels durch Anstieg längs der Mittelachse des Schmelztiegels zur freien Oberfläche geführt wird; und
- ein durch einen induktiven Plasmabrenner (2) erzeugtes Plasma (f) wird während einer Zeitdauer, die es gestattet, Verunreinigungen, für welche das reaktive Gas (gᵣ) des Plasmas angepaßt ist, zu beseitigen, auf die Oberfläche des Bads gerichtet.

2. Verfahren nach Anspruch 1,
**dadurch gekennzeichnet, daß** die Intensität der Turbulenz-Durchmischung bzw. -Durchwirbelung eine Funktion der Frequenz eines durch den Schmelztiegel (1) erzeugten elektromagnetischen Feldes ist.

3. Verfahren nach Anspruch 1 oder 2,
**dadurch gekennzeichnet, daß** es in der aufeinanderfolgenden Verwendung mehrerer reaktiver Gase (gᵣ) besteht.

4. Verfahren nach Anspruch 3,
**dadurch gekennzeichnet, daß** die reaktiven Gase (gᵣ) aus der Chlor, Sauerstoff, Wasserstoff und Wasser in Dampfform umfassenden Gruppe gewählt werden.

5. Verfahren nach einem der Ansprüche 1 bis 4,
**dadurch gekennzeichnet, daß** das Verfahren des weiteren, nach der Reinigung des Siliziumbads (b), in folgendem besteht:
- der Richtungssinn der Durchmischung bzw. Durchwirbelung des Bades wird umgekehrt; und
- als reaktives Gas (gᵣ) des Plasmas wird ein eine Dotierung des Siliziums gestattendes Element injiziert.

6. Verfahren nach Anspruch 5,
**dadurch gekennzeichnet, daß** das zum Dotieren des Siliziums injizierte reaktive Gas (gᵣ) Wasserstoff ist.

7. Verfahren nach einem der Ansprüche 1 bis 6,
**dadurch gekennzeichnet, daß** das Silizium in Chargen behandelt wird, deren Volumen im wesentlichen dem Volumen entspricht, das der Tiegel (1) aufnehmen kann, wobei der Tiegel bei der Beendigung der Behandlung einer laufenden Charge nicht vollständig entleert wird, zur Bildung einer flüssigen Start- bzw. Auslösehilfe, welche das Aufschmelzen bei der folgenden Charge unterstützt.

8. Verfahren nach einem der Ansprüche 1 bis 7,
**dadurch gekennzeichnet, daß**, wenn bei der anfänglichen Startphase der Anlage das Plasma ohne reaktives Gas zum Erwärmen der Oberfläche der in dem Schmelztiegel (1) enthaltenen Siliziumcharge verwendet wird, bis diese Charge eine Temperatur erreicht, die ausreicht, um sie leitfähig zu machen, die weitere Aufheizung der Charge und das Halten der Charge bei der gewünschten Temperatur in der Folge durch das Magnetfeld des induktiven Schmelztiegels gewährleistet wird.

9. Anlage bzw. Einrichtung zur Reinigungsraffination von Silizium, **dadurch gekennzeichnet, daß** sie umfaßt:
- einen induktiven Kalt-Schmelztiegel (1) zur Aufnahme des Siliziums;
- einen auf die freie Oberfläche der in dem Schmelztiegel enthaltenen Siliziumcharge gerichteten induktiven Plasmabrenner (2); sowie
- ein abnehmbares Magnetjoch (3) zwischen dem Plasmabrenner (2) und dem Schmelztiegel (1), wobei das Magnetjoch ringförmig ist, um den Durchtritt der Plasmaflaame (f) zu gestatten.

10. Anlage bzw. Einrichtung nach Anspruch 9,
**dadurch gekennzeichnet, daß** dar Schmelztiegel (1) in seinem Boden eine Auslaßöffnung (14) aufweist, deren Öffnen durch ein Elektromagnetventil (5) gesteuert wird.

## Claims

1. A silicon refining method, **characterized in that** it consists of:
filling a cold inductive crucible (1) with solid silicon;
melting the content of the crucible;
creating, by means of the inductive crucible, a turbulent stirring of the silicon melt (b) by bringing the liquid from the bottom of the crucible to the free surface by ascending along the central axis of the crucible; and
directing a plasma (f) generated by an inductive plasma torch (2) towards the melt surface for a duration enabling elimination of impurities for which the reactive gas (gᵣ) of the plasma is adapted.

2. The method of claim 1, **characterized in that** the intensity of the turbulent stirring is a function of the frequency of an electromagnetic field created by the crucible (1).

3. The method of claim 1 or 2, **characterized in that** it consists of sequentially using several reactive gases (gᵣ).

4. The method of claim 3, **characterized in that** the reactive gases (gᵣ) are selected from the group including chlorine, oxygen, hydrogen, and water vapor.

5. The method of any of claims 1 to 4, **characterized in that** it further consists of, after purification of the silicon melt (b):
inverting the melt stirring direction; and
injecting, as a reactive gas (gᵣ) of the plasma, an element enabling doping of the silicon.

6. The method of claim 5, **characterized in that** the reactive gas (gᵣ) injected to dope the silicon is hydrogen.

7. The method of any of claims 1 to 6, **characterized in that** the silicon is processed by batches of a volume substantially corresponding to the volume that can be contained in the crucible (1), the crucible not being integrally emptied at the end of the processing of a current batch to form a liquid seed furthering the melting during the next batch.

8. The method of any of claims 1 to 7, **characterized in that**, during an initial starting phase of the installation, the plasma is used without any reactive gas to heat up the surface of the silicon load contained in the crucible (1), until this load reaches a temperature sufficient to make it conductive, the continuation of the load heating and its maintaining at the desired temperature being afterwards ensured by the magnetic field of the inductive crucible.

9. A silicon refining installation, **characterized in that** it includes:
a cold inductive crucible (1) adapted to receiving the silicon;
an inductive plasma torch (2) directed towards the free surface of the silicon load contained in the crucible; and
a removable magnetic yoke (3) between the plasma torch (2) and the crucible (1), the yoke being ring-shaped to enable the passing of the plasma flame (f).

10. The installation of claim 9, **characterized in that** the crucible (1) includes, at its bottom, an aperture (14) having its opening controlled by an electromagnetic valve (5).
